# EUROPEAN PATENT APPLICATION

(11) **EP 3 159 804 A1**
(43) Date of publication of application: **26.04.2017**
(21) Application number: 14896654.2
(22) Date of filing: 30.09.2014
(51) Int. Cl.: G06F 13/40

(54) **CHIP INTERCONNECTION METHOD, CHIP AND DEVICE**

(30) Priority: 30.06.2014 CN 201410307250
(71) Applicant: Sanechips Technology Co., Ltd., Nanshan District Shenzhen, Guangdong 518055 (CN)
(72) Inventor: JIANG, Jianping, Shenzhen Guangdong 518055 (CN)
(74) Representative: Gevers Patents
(86) International application number: PCT/CN2014/087995
(87) International publication number: WO 2016/000339

(57) **Abstract**

A chip receives a master-or-slave mode selecting signal. The master-or-slave mode selecting signal may be used for indicating whether the chip is to serve as a master chip or as a slave chip. In response to determining, according to the master-or-slave mode selecting signal, that the chip is to serve as the master chip, the chip accesses N slave chips, controls the N slave chips, and performs memory data processing by cooperating with the N slave chips. The N may be a positive integer no smaller than 1.

## Description

### TECHNICAL FIELD

The present disclosure relates to chip technology in the field of communications, and in particular to a method and device for chip interconnection, and a chip.

### BACKGROUND

With rapid development of wireless technology and wired technology, service processing capability has been multiplying, posing higher requirements on both the scale and the processing capability of a chip at a system core. However, there can only be limited increase in a design scale of a chip due to limitations in processing technology and in power consumption and cost of the chip. This poses a pressing need for increasing the processing capability of a chip in order to meet the huge growth in service processing capability. An existing solution in the industry mainly relies on increasing the design scale of a chip. This, to some extent, increases the design cost of the chip and technical difficulty therein, increasing power consumption by the chip.

### SUMMARY

In view of this, an embodiment herein provides a method and device for chip interconnection, and a chip, capable of solving at least the aforementioned problem in existing art.

An embodiment herein provides a method for chip interconnection, including:
receiving, by a chip, a master-or-slave mode selecting signal which is for indicating whether the chip is to serve as a master chip or as a slave chip; and
in response to determining, according to the master-or-slave mode selecting signal, that the chip is to serve as the master chip, accessing, by the chip, N slave chips, controlling the N slave chips, and processing memory data by cooperating with the N slave chips, the N being a positive integer no smaller than 1.

The determining that the chip is to serve as the master chip may include: in response to determining that a value in the received master-or-slave mode selecting signal is zero, determining that the chip is to serve as the master chip; and otherwise in response to determining that a value in the received master-or-slave mode selecting signal is non-zero, determining that the chip is to serve as a slave chip.

The processing memory data by cooperating with the N slave chips may include: reading data from a slave chip or writing data to a slave chip via a data signal.

The controlling the N slave chips may include at least one of:
selecting, via an address signal, a slave chip to be accessed; the address signal including first data and second data, the first data being consistent with the master-or-slave mode selecting signal and located at a high bit or a low bit in the address signal, the second data being a chip identification of the slave chip to be accessed by the master chip;
setting, via a valid enabling signal, an access mode of a slave chip;
setting, via a write enabling signal, whether a slave chip is in a valid write mode;
setting, via a read enabling signal, whether a slave chip is in a read enabled mode;
determining, by receiving a valid read signal, whether the chip is in a state of reading data from a slave chip; and
resetting a slave chip via a resetting signal.

The accessing, by the chip, N slave chips may include: accessing the slave chips via channels in different address spaces, wherein the address spaces are configurable.

An embodiment herein further provides a method for chip interconnection, including:
receiving, by a chip, a master-or-slave mode selecting signal which is for indicating whether the chip is to serve as a master chip or as a slave chip; and
in response to determining, according to the master-or-slave mode selecting signal, that the chip is to serve as a slave chip, receiving, by the chip, access and control from the master chip, and processing data by cooperating with the master chip.

The determining, according to the master-or-slave mode selecting signal, that the chip is to serve as a slave chip may include: in response to determining that a value in the received master-or-slave mode selecting signal is non-zero, determining that the chip is to serve as a slave chip.

The processing data by cooperating with the master chip includes: exchanging a data signal with the master chip for the master chip to write data to the chip or for the master chip to read data from the chip.

The receiving, by the chip, access and control from the master chip may include at least one of:
receiving, by the chip, an address signal sent by the master chip, determining, according to a chip identification of a slave chip to be accessed by the master chip in second data in the address signal, whether the chip is the slave chip to be accessed by the master chip, and in response to determining that the chip is the slave chip to be accessed by the master chip, establishing a connection with the master chip;
determining, by the chip, an access mode of the chip by receiving a valid enabling signal sent by the master chip;
determining, by the chip by receiving a write enabling signal sent by the master chip, whether the chip is in a valid write mode;
determining, by the chip by receiving a read enabling signal sent by the master chip, whether the chip is in a read enabled mode;
informing, by the chip by sending the master chip a valid read signal, the master chip to read data from the chip;
performing resetting by the chip according to a resetting signal sent by the master chip.

The receiving, by the chip, access and control from the master chip may include: receiving an address channel configured by the master chip, and receiving, via the address channel, access from the master chip.

An embodiment herein provides a chip, including an interface signal control module and a system cascade bus switch module.

The interface signal control module is configured for: receiving a master-or-slave mode selecting signal, and in response to determining, according to the master-or-slave mode selecting signal, that the chip is to serve as the master chip, triggering the system cascade bus switch module.

The system cascade bus switch module is configured for: accessing N slave chips, and processing memory data by cooperating with the N slave chips, the N being a positive integer no smaller than 1.

The interface signal control module may include:
a receiving sub-module configured for: receiving the master-or-slave mode selecting signal; and
a logic sub-module configured for: performing internal logic according to the received master-or-slave mode selecting signal, and in response to determining that a value in the received master-or-slave mode selecting signal is zero, determining that the chip is to serve as the master chip.

The chip may further include a data selecting module configured for: reading data from a slave chip or writing data to a slave chip via a data signal.

The system cascade bus switch module may be configured for: controlling loopback data access and read or write access selection performed by the data selecting module.

The system cascade bus switch module may include:
a memory configured for: caching data and control signals during a system cascade bus switch;
a memory controlling sub-module configured for: controlling access of the memory; and
a system cascade bus switch sub-module configured for: selecting, via an address signal, a slave chip to be accessed; the address signal including first data and second data, the first data being consistent with the master-or-slave mode selecting signal and located at a high bit or a low bit in the address signal, the second data being a chip identification of the slave chip to be accessed by the master chip; setting, via a valid enabling signal, an access mode of a slave chip; setting, via a write enabling signal, whether a slave chip is in a valid write mode; setting, via a read enabling signal, whether a slave chip is in a read enabled mode; determining, by receiving a valid read signal, whether the chip is in a state of reading data from a slave chip; and sending a slave chip a resetting signal and resetting the slave chip via the resetting signal.

The system cascade bus switch module is configured for: accessing the slave chips via channels in different address spaces, wherein the address spaces are configurable.

An embodiment herein provides a chip, including an interface signal control module and a cascade system bus switch module.

The interface signal control module is configured for: receiving a master-or-slave mode selecting signal which is for indicating whether the chip is to serve as a master chip or as a slave chip; in response to determining, according to the master-or-slave mode selecting signal, that the chip is to serve as a slave chip, triggering the cascade system bus switch module.

The cascade system bus switch module is configured for: receiving access and control from the master chip, and processing data by cooperating with the master chip.

The interface signal control module may include:
a receiving sub-module configured for: receiving the master-or-slave mode selecting signal; and
a logic sub-module configured for: performing internal logic according to the received master-or-slave mode selecting signal, and in response to determining that a value in the received master-or-slave mode selecting signal is non-zero, determining that the chip is to serve as a slave chip.

The chip may further include a data selecting module configured for: exchanging a data signal with the master chip for the master chip to write data to the chip or for the master chip to read data from the chip.

The cascade system bus switch module may include:
a memory configured for: caching data and control signals;
a memory controlling sub-module configured for: memory access control;
an address mapping sub-module configured for: pre-storing an address mapping table for dividing an address space of the chip into configurable fixed channels in space units;
a cascade system bus switch sub-module configured for: receiving an address signal sent by the master chip, determining whether the chip is a slave chip to be accessed by the master chip, and in response to determining that the chip is the slave chip to be accessed by the master chip, establishing a connection with the master chip; determining an access mode of the chip by receiving a valid enabling signal sent by the master chip; determining, by receiving a write enabling signal sent by the master chip, whether the chip is in a valid write mode; determining, by receiving a read enabling signal sent by the master chip, whether the chip is in a read enabled mode; informing, by sending the master chip a valid read signal, the master chip to read data from the informing chip; and
a system control register sub-module configured for: in response to receiving a resetting signal sent by the master chip, resetting the chip.

The cascade system bus switch module may be configured for: receiving an address channel configured by the master chip, and receiving, via the address channel, access from the master chip.

An embodiment herein provides a device for chip interconnection, including a master chip and N slave chips. The N is a positive integer no smaller than 1.

The master chip is configured for: receiving a master-or-slave mode selecting signal which is for indicating whether the chip is to serve as a master chip or as a slave chip; in response to determining, according to the master-or-slave mode selecting signal, that the chip is to serve as a master chip, accessing the N slave chips, controlling the N slave chips, and processing memory data by cooperating with the N slave chips.

Each of the N slave chips is configured for: receiving a master-or-slave mode selecting signal; in response to determining, by the secondary chip according to the master-or-slave mode selecting signal, that the secondary chip is to serve as a slave chip, receiving access and control from the master chip, and processing data by cooperating with the master chip.

The master chip may include an interface signal control module and a system cascade bus switch module.

The interface signal control module may be configured for: receiving the master-or-slave mode selecting signal, and in response to determining, according to the master-or-slave mode selecting signal, that the chip is to serve as a master chip, triggering the system cascade bus switch module.

The system cascade bus switch module may be configured for: accessing the N slave chips, and processing memory data by cooperating with the N slave chips. The N may be a positive integer no smaller than 1.

The interface signal control module may include:
a receiving sub-module configured for: receiving the master-or-slave mode selecting signal; and
a logic sub-module configured for: performing internal logic according to the received master-or-slave mode selecting signal, and in response to determining that a value in the received master-or-slave mode selecting signal is zero, determining that the chip is to serve as the master chip.

The master chip may further include a data selecting module configured for: reading data from a slave chip or writing data to a slave chip via a data signal. The system cascade bus switch module may be configured for: controlling loopback data access and read or write access selection performed by the data selecting module.

The system cascade bus switch module may include:
a memory configured for: caching data and control signals during a system cascade bus switch;
a memory controlling sub-module configured for: controlling access of the memory;
a system cascade bus switch sub-module configured for: selecting, via an address signal, a slave chip to be accessed; the address signal including first data and second data, the first data being consistent with the master-or-slave mode selecting signal and located at a high bit or a low bit in the address signal, the second data being a chip identification of the slave chip to be accessed by the master chip; setting, via a valid enabling signal, an access mode of a slave chip; setting, via a write enabling signal, whether a slave chip is in a valid write mode; setting, via a read enabling signal, whether a slave chip is in a read enabled mode; determining, by receiving a valid read signal, whether the master chip is in a state of reading data from a slave chip; and
a system control register sub-module configured for: sending a slave chip a resetting signal and resetting the slave chip via the resetting signal.

The system cascade bus switch module may be configured for: accessing the slave chips via channels in different address spaces, wherein the address spaces are configurable.

The slave chip may include an interface signal control module and a cascade system bus switch module.

The interface signal control module may be configured for: receiving the master-or-slave mode selecting signal which is for indicating whether the chip is to serve as a master chip or as a slave chip; in response to determining, according to the master-or-slave mode selecting signal, that the chip is to serve as a slave chip, triggering the cascade system bus switch module.

The cascade system bus switch module may be configured for: receiving access and control from the master chip, and processing data by cooperating with the master chip.

The interface signal control module may include:
a receiving sub-module configured for: receiving the master-or-slave mode selecting signal; and
a logic sub-module configured for: performing internal logic according to the received master-or-slave mode selecting signal, and in response to determining that a value in the received master-or-slave mode selecting signal is non-zero, determining that the chip is to serve as a slave chip.

The slave chip may further include a data selecting module configured for: exchanging a data signal with the master chip for the master chip to write data to the chip or for the master chip to read data from the chip.

The cascade system bus switch module may include:
a memory configured for: caching data and control signals;
a memory controlling sub-module configured for: memory access control;
an address mapping sub-module configured for: pre-storing an address mapping table for dividing an address space of the chip into configurable fixed channels in space units;
a cascade system bus switch sub-module configured for: receiving an address signal sent by the master chip, determining whether the chip is a slave chip to be accessed by the master chip, and in response to determining that the chip is the slave chip to be accessed by the master chip, establishing a connection with the master chip; determining an access mode of the chip by receiving a valid enabling signal sent by the master chip; determining, by receiving a write enabling signal sent by the master chip, whether the chip is in a valid write mode; determining, by receiving a read enabling signal sent by the master chip, whether the chip is in a read enabled mode; informing, by sending the master chip a valid read signal, the master chip to read data from the informing chip; and
a system control register sub-module configured for: in response to receiving a resetting signal sent by the master chip, resetting the chip.

The cascade system bus switch module may be configured for: receiving an address channel configured by the master chip, and receiving, via the address channel, access from the master chip.

With the method and device for chip interconnection, and the chip according to embodiments herein, by setting a master chip and a slave chip, and by collaboration between the master chip and the slave chip(s), comprehensive service processing capability of the chips may be increased, increasing chip utilization, thereby increasing competitiveness of a system where the chips apply.

### BRIEF DESCRIPTION OF THE DRAWINGS

Fig.1 is a flowchart of a method for chip interconnection according to an embodiment herein.
Fig.2 is a flowchart of a method for chip interconnection according to an embodiment herein.
Fig.3 is a diagram of a structure of a chip according to an embodiment herein.
Fig.4 is a diagram of a structure of a system cascade bus switch module in a chip according to an embodiment herein.
Fig.5 is a diagram of a structure of a chip according to an embodiment herein.
Fig.6 is a diagram of a structure of a cascade system bus switch module in a chip according to an embodiment herein.
Fig.7 is a diagram of a structure of a device for chip interconnection according to an embodiment herein.
Fig.8 is a diagram of a scene of chip interconnection according to an embodiment herein.
Fig.9 is a diagram of a scene of chip interconnection according to an embodiment herein.

### DETAILED DESCRIPTION

The present disclosure is further elaborated below with reference to drawings and embodiments.

### Embodiment 1

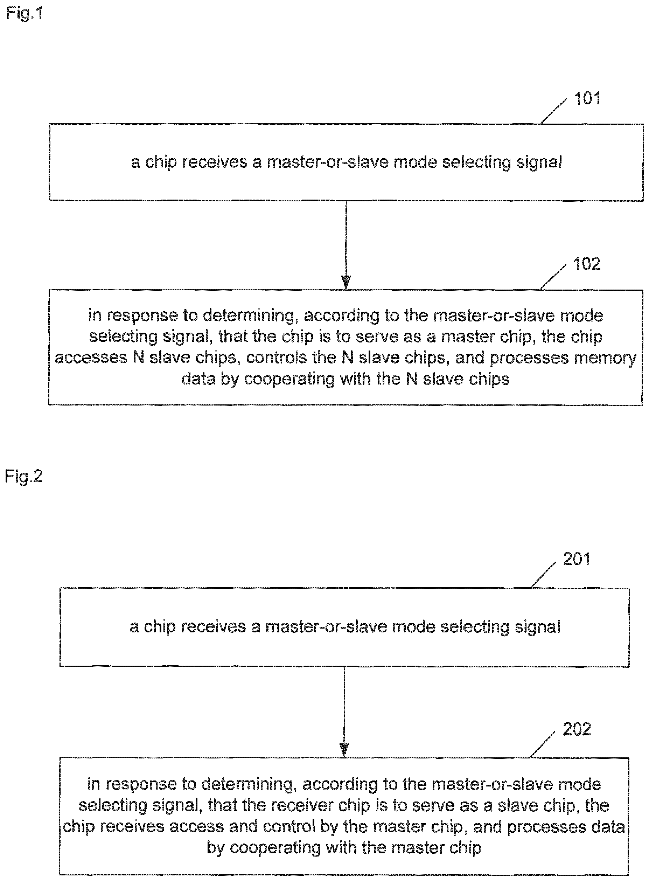

An embodiment herein provides a method for chip interconnection, as shown in Fig.1. The method includes steps as follows.

In step 101, a chip receives a master-or-slave mode selecting signal. The master-or-slave mode selecting signal may be used for indicating whether the chip is to serve as a master chip or as a slave chip.

In step 102, in response to determining, according to the master-or-slave mode selecting signal, that the chip is to serve as the master chip, the chip accesses N slave chips, controls the N slave chips, and performs memory data processing by cooperating with the N slave chips. The N may be a positive integer no smaller than 1.

The chip may receive the master-or-slave mode selecting signal as follows. A master-or-slave mode setting pin in a primary or first chip may receive, via an interconnection bus, the master-or-slave mode selecting signal (CC_BS).

A bit width of the master-or-slave mode selecting signal may be configured. A minimal bit width may be 1. A maximal bit width may be set as needed. The master-or-slave mode selecting signal may be input to the chip. A master-or-slave mode selecting signal with a value of zero may indicate that the chip is to function as a master chip. A master-or-slave mode selecting signal with a non-zero value may indicate that the chip is to function as a slave chip, and may indicate a numbering of the slave chip. The value of the master-or-slave mode selecting signal in general may remain constant during normal operation of the chip.

The primary chip may determine, according to the master-or-slave mode selecting signal, whether the chip is to serve as the master chip as follows. In response to determining that the value included in the received master-or-slave mode selecting signal is zero, it may be determined that the chip is to serve as the master chip. Otherwise in response to determining that the value included in the received master-or-slave mode selecting signal is non-zero, it may be determined that the chip is to serve as a slave chip.

The chip may access the N slave chips as follows. The chip may access the slave chips via channels in different address spaces. The address spaces may be configured. The master chip may access the N slave chips respectively via N configured address channels. The address channels may be configured/configurable.

The chip may perform memory data processing by cooperating with the N slave chips as follows. The chip may read data from a slave chip or write data to a slave chip via a data signal (CC_DATA). A bit width of the data signal may be configurable. Data in an in-chip bus of the master chip and in an in-chip bus of a slave chip may be transmitted via the data signal. Data may be read out from the master chip and written to a slave chip. The master chip may read out data from a slave chip and write the read out data to the master chip.

The master chip may control the N slave chips by at least one of operations as follows.

A slave chip to be accessed by the master chip may be selected via an address signal (CC_ADDR). A bit width of the address signal may be configurable. The address signal in the master (chip) mode may be output by the master chip. The address signal in the slave (chip) mode may be input to a slave chip. A valid address of the address signal may be an address of the master chip in a physical space, as well as an address of a slave chip in the physical space. The address signal may include first data and second data. The first data may remain consistent with the CC_BS signal. The first data may be located at a high bit or a low bit in the address signal. The second data may be a chip identification (ID) of the slave chip to be accessed by the master chip. Thereby, sending the address signal may allow a slave chip to determine whether the master chip is to access the slave chip, thereby linking an access from the master chip to a slave chip.

An access mode of a slave chip may be set via a valid enabling signal (CC_CS). The valid enabling signal may be of a single bit. The valid enabling signal in the master (chip) mode may be output by the master chip. The valid enabling signal in the slave (chip) mode may be input to a slave chip. A low level of the valid enabling signal may denote that a but is in an accessing (e.g., reading or writing) mode, that the reading mode and the writing mode are valid or effective (or taking effect), depending on a CC_WE signal and a CC_OE signal as follows.

Whether a slave chip is in a valid write mode may be set via a write enabling signal (CC_WE). The write enabling signal may be of a single bit. The write enabling signal may be output by the master chip. For example, when the write enabling signal is of a low level, and the valid enabling signal is of a low level, the slave chip may be set as in a write effective/enabled mode or "write" mode, which means data may be written to the slave chip. A phase between the write enabling signal and the CC_CS signal may be configurable.

Whether a slave chip is in a read enabled mode may be set via a read enabling signal (CC_OE). The read enabling signal may be of a single bit. The read enabling signal may be output by the master chip. For example, a low level of the read enabling signal and a low level of the CC_CS signal may denote a valid bus read. A phase between the read enabling signal and the CC_CS signal may be configurable.

Whether the master chip is in a state of reading data from a slave chip may be determined by receiving a valid read signal (CC_BUSY). The valid read signal may be of a single bit. The valid read signal may be input to the master chip. The valid read signal may be output by a slave chip. A high level of the valid read signal may denote that data sent by the slave chip to the master chip are valid data. A phase of the valid read signal in relation to that of the CC_CS signal and the CC_OE signal may be configurable.

A slave chip may be reset via a resetting signal (CC_RST). The resetting signal may be of a single bit. The resetting signal may be output by the master chip. The resetting signal may be input to a slave chip. For example, when the resetting signal is of a low level, a configuration such as a register in a slave chip and an interface bus of the device or system herein may be reset.

The interconnection bus may switch to any in-chip bus among the chips. A timing parameter of the interconnection bus may be configured. The interconnecting interface bus may be a simplex asynchronous interface, with no clock signal.

### Embodiment 2

the embodiment provides a method for chip interconnection, as shown in Fig.2, increasing:
In step 201, a chip receives a master-or-slave mode selecting signal. The master-or-slave mode selecting signal may be used for indicating whether the chip is to serve as a master chip or as a slave chip.

In step 202, in response to determining, according to the master-or-slave mode selecting signal, that the chip is to serve as a slave chip, the chip receives access and control from the master chip, and performs data processing by cooperating with the master chip.

The chip may receive the master-or-slave mode selecting signal as follows. A master-or-slave mode setting pin in a secondary or second chip may receive, via an interconnection bus, the master-or-slave mode selecting signal (CC_BS).

A bit width of the master-or-slave mode selecting signal may be configured. A minimal bit width may be 1. A maximal bit width may be set as needed. The master-or-slave mode selecting signal may be input to the chip. A master-or-slave mode selecting signal with a value of zero may indicate that the chip is to function as a master chip. A master-or-slave mode selecting signal with a non-zero value may indicate that the chip is to function as a slave chip, and may indicate a numbering of the slave chip. The value of the master-or-slave mode selecting signal in general may remain constant during normal operation of the chip.

The chip may determine, according to the master-or-slave mode selecting signal, whether the chip is to serve as a slave chip as follows. In response to determining that a value included in the received master-or-slave mode selecting signal is non-zero, it may be determined that the chip (the chip having received the input signal) is to serve or function as a slave chip.

The chip may perform data processing by cooperating with the master chip as follows. The chip may exchange a data signal (CC_DATA)with the master chip for the master chip to write data to the chip or for the master chip to read data from the chip. A bit width of the data signal may be configurable.

The chip may receive access and control from the master chip by at least one of operations as follows.

The chip may receive an address signal (CC_ADDR)sent by the master chip, determine whether the chip (chip having received the input signal, here being the address signal) is a slave chip to be accessed by the master chip, and in response to determining that the chip is the slave chip to be accessed by the master chip, establish a connection with the master chip. A bit width of the address signal may be configurable. The address signal in the master (chip) mode may be output by the master chip. The address signal in the slave (chip) mode may be input to a slave chip. A valid address of the address signal may be an address of the master chip in a physical space, as well as an address of a slave chip in the physical space. The address signal may include first data and second data. The first data may remain consistent with the CC_BS signal. The first data may be located at a high bit or a low bit in the address signal. The second data may be a chip identification (ID) of the slave chip to be accessed by the master chip.

The chip may determine an access (read or write) mode of the chip by receiving a valid enabling signal (CC_CS)sent by the master chip. The valid enabling signal may be of a single bit. The valid enabling signal in the master (chip) mode may be output by the master chip. The valid enabling signal in the slave (chip) mode may be input to a slave chip. A low level of the valid enabling signal may denote that a but is in an accessing (e.g., reading or writing) mode, that the reading mode and the writing mode are valid or effective (or taking effect), depending on a CC_WE signal and a CC_OE signal as follows.

The chip may determine, by receiving a write enabling signal (CC_WE)sent by the master chip, whether the chip is in a valid write mode. The write enabling signal may be of a single bit. The write enabling signal may be output by the master chip. For example, when the write enabling signal is of a low level, and the valid enabling signal is of a low level, the slave chip may be set as write valid. A phase between the write enabling signal and the CC_CS signal may be configurable.

The chip may determine, by receiving a read enabling signal (CC_OE)sent by the master chip, whether the chip is in a read enabled mode. The read enabling signal may be of a single bit. The read enabling signal may be output by the master chip. For example, a low level of the read enabling signal and a low level of the CC_CS signal may denote a valid bus read. A phase between the read enabling signal and the CC_CS signal may be configurable.

The chip may inform, by sending the master chip a valid read signal (CC_BUSY), the master chip to read data from the chip. The valid read signal may be of a single bit. The valid read signal may be input to the master chip. The valid read signal may be output by a slave chip. A high level of the valid read signal may denote that data sent by the slave chip to the master chip are valid data. A phase of the valid read signal in relation to that of the CC_CS signal and the CC_OE signal may be configurable.

The chip may be reset according to a resetting signal (CC_RST)sent by the master chip. The resetting signal may be of a single bit. The resetting signal may be output by the master chip. The resetting signal may be input to a slave chip. For example, when the resetting signal is of a low level, a configuration such as a register of a device in a slave chip and an interface bus may be reset.

The method may further include that: an address channel corresponding to an accessing address space may be preset. Accessing channels of different capacities may be set in the accessing address space.

The interconnection bus may switch to any in-chip bus among the chips. A timing parameter of the interconnection bus may be configured. The interconnecting interface bus may be a simplex asynchronous interface, with no clock signal.

### Embodiment 3

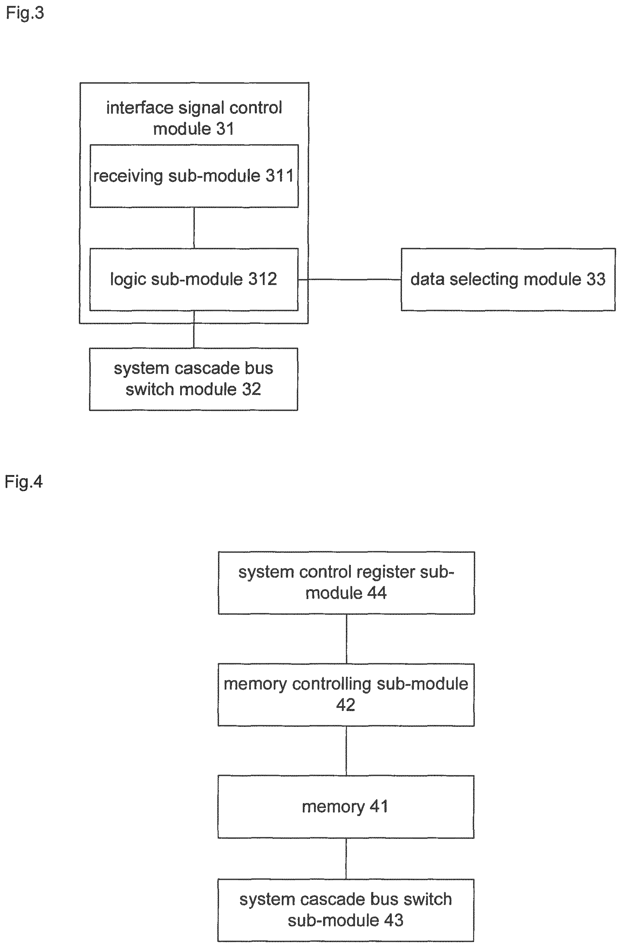

The embodiment provides a chip, as shown in Fig.3, including an interface signal control module and a system cascade bus switch module.

The interface signal control module 31 (IO_CTRL) is configured for: receiving a master-or-slave mode selecting signal, and in response to determining, according to the master-or-slave mode selecting signal, that the chip is to serve as the master chip, triggering the system cascade bus switch module.

The system cascade bus switch module 32 (BUS2ASRAM) is configured for: accessing N slave chips, and processing memory data by cooperating with the N slave chips. The N may be a positive integer no smaller than 1.

The interface signal control module 31 may include:
a receiving sub-module 311 configured for: receiving the master-or-slave mode selecting signal (CC-BS); and
a logic sub-module 312 configured for: performing internal logic according to the received master-or-slave mode selecting signal, and in response to determining that a value in the received master-or-slave mode selecting signal is zero, determining that the chip is to serve as the master chip, and otherwise in response to determining that a value in the received master-or-slave mode selecting signal is non-zero, determining that the chip is to serve as a slave chip.

The system cascade bus switch module 32 (system cascade bus switching module, BUS2ASRAM) may implement some basic configuring functions of the device, including a configuration for controlling loopback access of the device, a configuration of a phase controlling parameter of a signal controlling access by an external cascade interface bus, etc. In addition, the system cascade bus switch module may provide a switch to an external cascade bus via any system bus, such as an AXI bus, an AHB bus, an APB bus, etc., of an AMBA bus. Refer to Fig.2 for a composition.

The chip may further include a data selecting module 33 configured for: when the chip serves as the master chip, reading data from a slave chip or writing data to a slave chip. The system cascade bus switch module may be configured for: controlling loopback data access and read or write access selection performed by the data selecting module.

The system cascade bus switch module, as shown in Fig.4, may include a system control register sub-module (system control register sub-module, CFGREG), a system cascade bus switch sub-module (system cascade bus switching sub-module, BUS2ASRAM), a memory (MEM), and a memory controlling sub-module.

The memory 41 may be configured for: caching data and control signals during a system cascade bus switch. When cached data fills up to a burst length, or are of a certain length, the system cascade bus switch sub-module 43 may read the cached data.

The memory controlling sub-module 42 may be configured for: controlling access of the memory 41.

The system cascade bus switch sub-module 43 (BUS2ASRAM) may be configured for: selecting, via an address signal (CC_ADDR), a slave chip to be accessed. A bit width of the address signal may be configurable. The address signal in the master (chip) mode may be output by the master chip. The address signal in the slave (chip) mode may be input to a slave chip. A valid address of the address signal may be an address of the master chip in a physical space, as well as an address of a slave chip in the physical space. The address signal may include first data and second data. The first data may remain consistent with the CC_BS signal. The first data may be located at a high bit or a low bit in the address signal. The second data may be a chip identification (ID) of the slave chip to be accessed by the master chip. Sending the address signal may allow a slave chip to determine whether the master chip is to access the slave chip, thereby linking an access from the master chip to a slave chip.

An access mode of a slave chip may be set via a valid enabling signal (CC_CS). The valid enabling signal may be of a single bit. The valid enabling signal in the master (chip) mode may be output by the master chip. The valid enabling signal in the slave (chip) mode may be input to a slave chip. A low level of the valid enabling signal may denote that a but is in an accessing (e.g., reading or writing) mode, that the reading mode and the writing mode are valid or effective (or taking effect), depending on a CC_WE signal and a CC_OE signal as follows.

Whether a slave chip is in a valid write mode may be set via a write enabling signal (CC_WE). The write enabling signal may be of a single bit. The write enabling signal may be output by the master chip. For example, when the write enabling signal is of a low level, and the valid enabling signal is of a low level, the slave chip may be set as write valid. A phase between the write enabling signal and the CC_CS signal may be configurable.

Whether a slave chip is in a read enabled mode may be set via a read enabling signal (CC_OE). The read enabling signal may be of a single bit. The read enabling signal may be output by the master chip. For example, a low level of the read enabling signal and a low level of the CC_CS signal may denote a valid bus read. A phase between the read enabling signal and the CC_CS signal may be configurable.

Whether the master chip is in a state of reading data from a slave chip may be determined by receiving a valid read signal (CC_BUSY). The valid read signal may be of a single bit. The valid read signal may be input to the master chip. The valid read signal may be output by a slave chip. A high level of the valid read signal may denote that data sent by the slave chip to the master chip are valid data. A phase of the valid read signal in relation to that of the CC_CS signal and the CC_OE signal may be configurable.

A resetting signal may be sent to a slave chip. The slave chip may be reset via the resetting signal (CC_RST). The resetting signal may be of a single bit. The resetting signal may be output by the master chip. The resetting signal may be input to a slave chip. For example, when the resetting signal is of a low level, a configuration such as a register of a device in a slave chip and an interface bus may be reset.

The system control register sub-module may be configured for: acquiring a configuration of the master chip.

The data selecting module may be configured for: reading data from a slave chip or writing data to a slave chip via a data signal (CC_DATA). A bit width of the data signal may be configurable. Data in an in-chip bus of the master chip and in an in-chip bus of a slave chip may be transmitted via the data signal. Data may be read out from the master chip and written to a slave chip. The master chip may read out data from a slave chip and write the read out data to the master chip.

The chip may further be provided with a cascade system bus switch module. However, when the chip serves as the master chip, the cascade system bus switch module may not operate.

### Embodiment 4

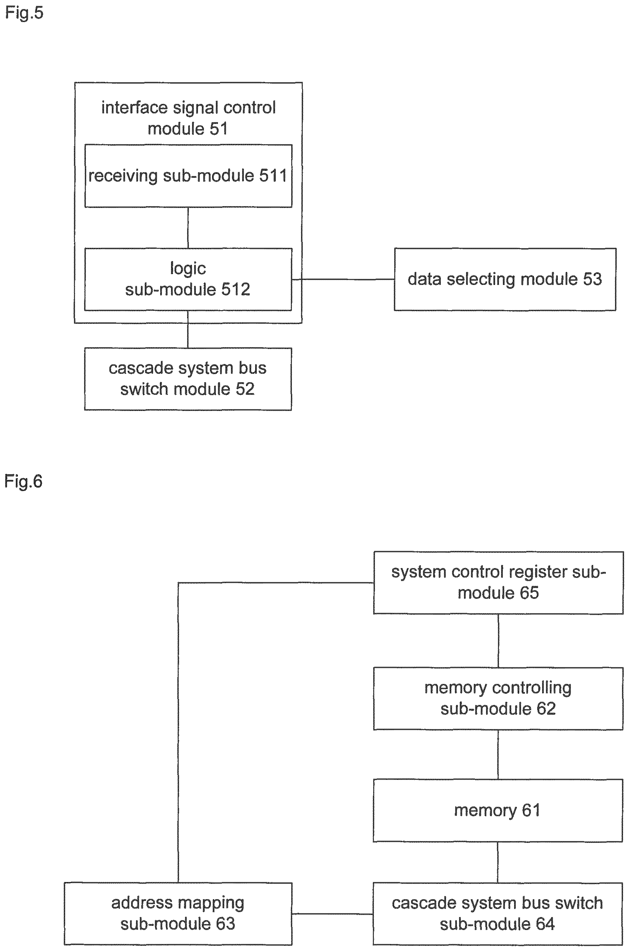

The embodiment provides a chip, as shown in Fig.5, including an interface signal control module and a cascade system bus switch module.

The interface signal control module 51 is configured for: receiving a master-or-slave mode selecting signal which is for indicating whether the chip is to serve as a master chip or as a slave chip; in response to determining, according to the master-or-slave mode selecting signal, that the chip is to serve as a slave chip, triggering the cascade system bus switch module (ASRAM2BUS).

The cascade system bus switch module 52 is configured for: receiving access and control from the master chip, and processing data by cooperating with the master chip.

The interface signal control module may include:
a receiving sub-module 511 configured for: receiving the master-or-slave mode selecting signal (CC_BS); and
a logic sub-module 512 configured for: performing internal logic according to the received master-or-slave mode selecting signal, and in response to determining that a value in the received master-or-slave mode selecting signal is zero, determining that the chip is to serve as the master chip, and otherwise in response to determining that a value in the received master-or-slave mode selecting signal is non-zero, determining that the chip is to serve as a slave chip.

A bit width of the master-or-slave mode selecting signal may be configured. A minimal bit width may be 1. A maximal bit width may be set as needed. The master-or-slave mode selecting signal may be input to the chip. A master-or-slave mode selecting signal with a value of zero may indicate that the chip is to function as a master chip. A master-or-slave mode selecting signal with a non-zero value may indicate that the chip is to function as a slave chip, and may indicate a numbering of the slave chip. The value of the master-or-slave mode selecting signal in general may remain constant during normal operation of the chip.

The chip may further include a data selecting module configured for: exchanging a data signal (CC_DATA) with the master chip for the master chip to write data to the chip or for the master chip to read data from the chip. A bit width of the data signal may be configurable.

The cascade system bus switch module (ASRAM2BUS), as shown in Fig.6, may include a system control register sub-module (CFGREG), a cascade system bus switch sub-module (ASRAM2BUS), a memory (MEM), a memory controlling sub-module, and an address mapping sub-module.

The memory 61 may be configured for: caching data and control signals.

The memory controlling sub-module 62 may be configured for: memory access control.

The address mapping sub-module 63 may be configured for: pre-storing an address mapping table. The address mapping table may allow dividing the address space of a slave chip accessed by the master chip into configurable fixed channels in space units such as 4KB, 16KB, 32KB, 64KB, 128KB, 1M, 2M, etc. Physical addresses of the device in the master chip may be divided according to such channels. Each channel in a slave chip may represent a starting address and a space size of an equipment physical address. The starting address of the physical address may be set as an equipment starting address. As a slave chip operates, the starting address may be configurable. The starting address may be reset.

In the master chip, the cascade system bus switch module may not operate.

The cascade system bus switch sub-module 64 may be configured for: receiving an address signal (CC_ADDR) sent by the master chip, determining whether the chip is a slave chip to be accessed by the master chip, and in response to determining that the chip is the slave chip to be accessed by the master chip, establishing a connection with the master chip. A bit width of the address signal may be configurable. The address signal in the master (chip) mode may be output by the master chip. The address signal in the slave (chip) mode may be input to a slave chip. A valid address of the address signal may be an address of the master chip in a physical space, as well as an address of a slave chip in the physical space. The address signal may include first data and second data. The first data may remain consistent with the CC_BS signal. The first data may be located at a high bit or a low bit in the address signal. The second data may be a chip identification (ID) of the slave chip to be accessed by the master chip. Accessing channels of different capacities may be set in the accessing address space.

The chip may determine an access (read or write) mode of the chip by receiving a valid enabling signal (CC_CS)sent by the master chip. The valid enabling signal may be of a single bit. The valid enabling signal in the master (chip) mode may be output by the master chip. The valid enabling signal in the slave (chip) mode may be input to a slave chip. A low level of the valid enabling signal may denote that a but is in an accessing (e.g., reading or writing) mode, that the reading mode and the writing mode are valid or effective (or taking effect), depending on a CC_WE signal and a CC_OE signal as follows.

The chip may determine, by receiving a write enabling signal (CC_WE)sent by the master chip, whether the chip is in a valid write mode. The write enabling signal may be of a single bit. The write enabling signal may be output by the master chip. For example, when the write enabling signal is of a low level, and the valid enabling signal is of a low level, the slave chip may be set as write valid. A phase between the write enabling signal and the CC_CS signal may be configurable.

The chip may determine, by receiving a read enabling signal (CC_OE)sent by the master chip, whether the chip is in a read enabled mode. The read enabling signal may be of a single bit. The read enabling signal may be output by the master chip. For example, a low level of the read enabling signal and a low level of the CC_CS signal may denote a valid bus read. A phase between the read enabling signal and the CC_CS signal may be configurable.

The chip may inform, by sending the master chip a valid read signal (CC_BUSY), the master chip to read data from the chip. The valid read signal may be of a single bit. The valid read signal may be input to the master chip. The valid read signal may be output by a slave chip. A high level of the valid read signal may denote that data sent by the slave chip to the master chip are valid data. A phase of the valid read signal in relation to that of the CC_CS signal and the CC_OE signal may be configurable.

The system control register sub-module 65 may be configured for: in response to receiving a resetting signal (CC_RST) sent by the master chip, resetting the chip. The resetting signal may be of a single bit. The resetting signal may be output by the master chip. The resetting signal may be input to a slave chip. For example, when the resetting signal is of a low level, a configuration such as a register of a device in a slave chip and an interface bus may be reset.

The interconnection bus may switch to any in-chip bus among the chips. A timing parameter of the interconnection bus may be configured. The interconnecting interface bus may be a simplex asynchronous interface, with no clock signal.

### Embodiment 5

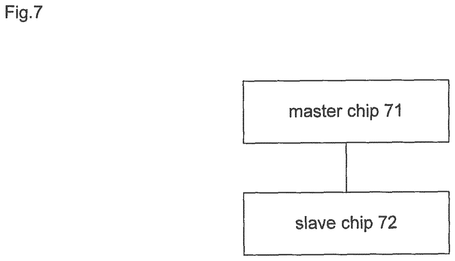

Based on aforementioned method for chip interconnection and aforementioned chip, the embodiment provides a device for chip interconnection. As shown in Fig.7, the device for chip interconnection may include a master chip and N slave chips.

The master chip 71 may be configured for: receiving a master-or-slave mode selecting signal which is for indicating whether the chip is to serve as a master chip or as a slave chip; in response to determining, according to the master-or-slave mode selecting signal, that the chip is to serve as a master chip, accessing the N slave chips, controlling the N slave chips, and processing memory data by cooperating with the N slave chips. The N may be a positive integer no smaller than 1.

A slave chip 72 may be configured for: receiving a master-or-slave mode selecting signal; in response to determining, by the secondary chip according to the master-or-slave mode selecting signal, that the secondary chip is to serve as a slave chip, receiving access and control from the master chip, and processing data by cooperating with the master chip.

The master chip may include an interface signal control module and a system cascade bus switch module.

The interface signal control module may be configured for: receiving the master-or-slave mode selecting signal, and in response to determining, according to the master-or-slave mode selecting signal, that the chip is to serve as a master chip, triggering the system cascade bus switch module.

The system cascade bus switch module may be configured for: accessing the N slave chips, and processing memory data by cooperating with the N slave chips.

The interface signal control module may include:
a receiving sub-module configured for: receiving the master-or-slave mode selecting signal; and
a logic sub-module configured for: performing internal logic according to the received master-or-slave mode selecting signal, and in response to determining that a value in the received master-or-slave mode selecting signal is zero, determining that the chip is to serve as the master chip.

The master chip may further include a data selecting module configured for: reading data from a slave chip or writing data to a slave chip via a data signal. The system cascade bus switch module may be configured for: controlling loopback data access and read or write access selection performed by the data selecting module.

The system cascade bus switch module may include:
a memory configured for: caching data and control signals during a system cascade bus switch;
a memory controlling sub-module configured for: controlling access of the memory;
a system cascade bus switch sub-module configured for: selecting, via an address signal, a slave chip to be accessed; the address signal comprising first data and second data, the first data being consistent with the master-or-slave mode selecting signal and located at a high bit or a low bit in the address signal, the second data being a chip identification of the slave chip to be accessed by the master chip; setting, via a valid enabling signal, an access mode of a slave chip; setting, via a write enabling signal, whether a slave chip is in a valid write mode; setting, via a read enabling signal, whether a slave chip is in a read enabled mode; determining, by receiving a valid read signal, whether the master chip is in a state of reading data from a slave chip; and
a system control register sub-module configured for: sending a slave chip a resetting signal and resetting the slave chip via the resetting signal.

The system cascade bus switch module may be configured for: accessing the slave chips via channels in different address spaces, wherein the address spaces are configurable.

The slave chip may include an interface signal control module and a cascade system bus switch module.

The interface signal control module may be configured for: receiving the master-or-slave mode selecting signal which is for indicating whether the chip is to serve as a master chip or as a slave chip; in response to determining, according to the master-or-slave mode selecting signal, that the chip is to serve as a slave chip, triggering the cascade system bus switch module.

The cascade system bus switch module may be configured for: receiving access and control from the master chip, and processing data by cooperating with the master chip.
the interface signal control module may include:
a receiving sub-module configured for: receiving the master-or-slave mode selecting signal; and
a logic sub-module configured for: performing internal logic according to the received master-or-slave mode selecting signal, and in response to determining that a value in the received master-or-slave mode selecting signal is non-zero, determining that the chip is to serve as a slave chip.

The slave chip may further include a data selecting module configured for: exchanging a data signal with the master chip for the master chip to write data to the chip or for the master chip to read data from the chip.

The cascade system bus switch module may include:
a memory configured for: caching data and control signals;
a memory controlling sub-module configured for: memory access control;
an address mapping sub-module configured for: pre-storing an address mapping table for dividing an address space of the chip into configurable fixed channels in space units;
a cascade system bus switch sub-module configured for: receiving an address signal sent by the master chip, determining whether the chip is a slave chip to be accessed by the master chip, and in response to determining that the chip is the slave chip to be accessed by the master chip, establishing a connection with the master chip; determining an access mode of the chip by receiving a valid enabling signal sent by the master chip; determining, by receiving a write enabling signal sent by the master chip, whether the chip is in a valid write mode; determining, by receiving a read enabling signal sent by the master chip, whether the chip is in a read enabled mode; informing, by sending the master chip a valid read signal, the master chip to read data from the informing chip; and
a system control register sub-module configured for: in response to receiving a resetting signal sent by the master chip, resetting the chip.

The cascade system bus switch module may be configured for: receiving an address channel configured by the master chip, and receiving, via the address channel, access from the master chip.

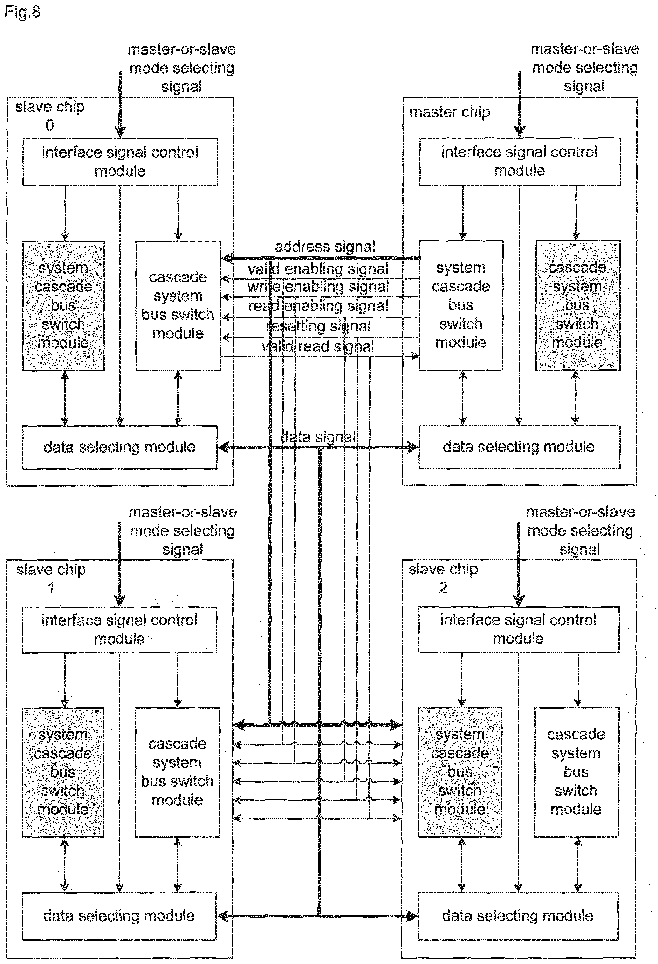

A cascade application may be as shown in Fig.8. In a cascade application, a CC_BS of a zero value may be input to a master chip, and a CC_BS of a non-zero value may be input to a slave chip. The master chip and the slave chip may be connected to each other via a cascade interface bus. A maximal number of slave chips may be CC_BS minus 1. In addition, it may be clear from Fig.8 that, when a chip serves as the master chip, a cascade system bus switch module in the chip may not operate. Correspondingly, when a chip serves as a slave chip, such as a slave chip 0, a system cascade bus switch module therein may not operate.

For example, an address of an external cascade interface bus has a bit width of 26 bits, a bit width of data of the external cascade interface bus is of 16 bits, and a master-or-slave mode selecting signal is configured to be of 4 bits. Such a device is elaborated below.

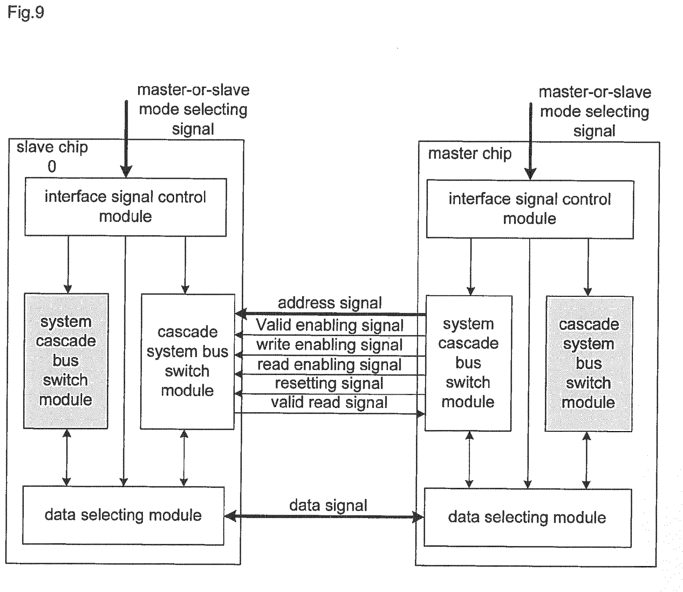

A chip cascade device of 16 chips is as shown in Fig.9, which illustrate but cascade of 2 of the chips, cascade connections of the other 14 chips are similar.

In embodiments provided by the present disclosure, it should be understood that the disclosed method and system may be implemented in other ways. The described device/apparatus embodiments are merely exemplary. For example, the unit division is merely logical function division and can be other division in actual implementation. For example, multiple units or components can be combined, or integrated into another system, or some features/characteristics can be omitted or skipped. Furthermore, the coupling, or direct coupling or communicational connection among the components illustrated or discussed herein may be implemented through interfaces; indirect coupling or communicational connection between apparatuses/devices or units may be electrical, mechanical, or in other forms.

The units described as separate components may be or may not be physically separated. Components shown as units may be or may not be physical units; they may be located in one place, or distributed on multiple network units. Some or all of the units may be selected to achieve the purpose of a solution of the present embodiments as needed.

In addition, various functional units in each embodiment of the present disclosure may be integrated in one processing unit, or exist as separate units respectively; or two or more such units may be integrated in one unit. The integrated unit may be implemented in form of hardware, or hardware plus software functional unit(s).

A person of ordinary skill in the art can understand that, all or part of the steps of the foregoing method embodiments may be implemented by instructing, by a program, relevant hardware. The program may be stored in a non-transitory computer readable storage medium. When the program runs, the steps included in a method embodiment are performed. The non-transitory storage medium includes various media capable of storing program codes, such as a mobile storage device, a Read-Only Memory (ROM), a Random Access Memory (RAM), a magnetic disk, or an optical disk, etc.

Or when being implemented as a software functional module and sold or used as an independent product, the integrated unit in the present disclosure may be also stored in a non-transitory computer-readable storage medium. Based on such understanding, the essence of the technical solution of the embodiments of the present disclosure, or the part contributing to the prior art may be embodied in form of a software product. The computer software product is stored in a storage medium, including several instructions allowing a computer device (which may be a personal computer, a server, or a network device etc.) to execute all or part of the method in embodiments of the present disclosure. The storage medium includes various media capable of storing program codes, such as a mobile storage device, an ROM, a magnetic disk, or an optical disk, etc.

What described are merely specific embodiments of the present disclosure, and are not intended to limit the protection scope of the present disclosure. Any modification or replacement, which are easily thought of by persons skilled in the prior art, and falls within the technical scope disclosed by the present disclosure, should fall within the protection scope of the present disclosure. Therefore, the protection scope of the present disclosure should be subject to the protection scope of the claims.

### Industrial Applicability

With a method and device for chip interconnection, and a chip according to the present disclosure, it is possible to determine, according to a received master-or-slave mode selecting signal, that a chip is to serve as a master chip or a slave chip, and by collaboration between the master chip and the slave chip(s), comprehensive service processing capability of the chips may be increased, increasing chip utilization, thereby increasing competitiveness of a system where the chips apply.

## Claims

1. A method for chip interconnection, comprising:
receiving, by a chip, a master-or-slave mode selecting signal which is for indicating whether the chip is to serve as a master chip or as a slave chip; and
in response to determining, according to the master-or-slave mode selecting signal, that the chip is to serve as the master chip, accessing, by the chip, N slave chips, controlling the N slave chips, and processing memory data by cooperating with the N slave chips, the N being a positive integer no smaller than 1.

2. The method according to claim 1, wherein the determining that the chip is to serve as the master chip comprises:
in response to determining that a value in the received master-or-slave mode selecting signal is zero, determining that the chip is to serve as the master chip; and
otherwise in response to determining that a value in the received master-or-slave mode selecting signal is non-zero, determining that the chip is to serve as a slave chip.

3. The method according to claim 1, wherein the processing memory data by cooperating with the N slave chips comprises: reading data from a slave chip or writing data to a slave chip via a data signal.

4. The method according to claim 1, wherein the controlling the N slave chips comprises at least one of:
selecting, via an address signal, a slave chip to be accessed; the address signal comprising first data and second data, the first data being consistent with the master-or-slave mode selecting signal and located at a high bit or a low bit in the address signal, the second data being a chip identification of the slave chip to be accessed by the master chip;
setting, via a valid enabling signal, an access mode of a slave chip;
setting, via a write enabling signal, whether a slave chip is in a valid write mode;
setting, via a read enabling signal, whether a slave chip is in a read enabled mode;
determining, by receiving a valid read signal, whether the chip is in a state of reading data from a slave chip; and
resetting a slave chip via a resetting signal.

5. The method according to claim 1, wherein the accessing, by the chip, N slave chips comprises: accessing the slave chips via channels in different address spaces, wherein the address spaces are configurable.

6. A method for chip interconnection, comprising:
receiving, by a chip, a master-or-slave mode selecting signal which is for indicating whether the chip is to serve as a master chip or as a slave chip; and
in response to determining, according to the master-or-slave mode selecting signal, that the chip is to serve as a slave chip, receiving, by the chip, access and control from the master chip, and processing data by cooperating with the master chip.

7. The method according to claim 6, wherein the determining, according to the master-or-slave mode selecting signal, that the chip is to serve as a slave chip comprises:
in response to determining that a value in the received master-or-slave mode selecting signal is non-zero, determining that the chip is to serve as a slave chip.

8. The method according to claim 6, wherein the processing data by cooperating with the master chip comprises: exchanging a data signal with the master chip for the master chip to write data to the chip or for the master chip to read data from the chip.

9. The method according to claim 6, wherein the receiving, by the chip, access and control from the master chip comprises at least one of:
receiving, by the chip, an address signal sent by the master chip, determining, according to a chip identification of a slave chip to be accessed by the master chip in second data in the address signal, whether the chip is the slave chip to be accessed by the master chip, and in response to determining that the chip is the slave chip to be accessed by the master chip, establishing a connection with the master chip;
determining, by the chip, an access mode of the chip by receiving a valid enabling signal sent by the master chip;
determining, by the chip by receiving a write enabling signal sent by the master chip, whether the chip is in a valid write mode;
determining, by the chip by receiving a read enabling signal sent by the master chip, whether the chip is in a read enabled mode;
informing, by the chip by sending the master chip a valid read signal, the master chip to read data from the chip;
performing resetting by the chip according to a resetting signal sent by the master chip.

10. The method according to claim 6, wherein the receiving, by the chip, access and control from the master chip comprises: receiving an address channel configured by the master chip, and receiving, via the address channel, access from the master chip.

11. A chip, comprising an interface signal control module and a system cascade bus switch module,
wherein the interface signal control module is configured for: receiving a master-or-slave mode selecting signal, and in response to determining, according to the master-or-slave mode selecting signal, that the chip is to serve as the master chip, triggering the system cascade bus switch module,
wherein the system cascade bus switch module is configured for: accessing N slave chips, and processing memory data by cooperating with the N slave chips, the N being a positive integer no smaller than 1.

12. The chip according to claim 11, wherein the interface signal control module comprises:
a receiving sub-module configured for: receiving the master-or-slave mode selecting signal; and
a logic sub-module configured for: performing internal logic according to the received master-or-slave mode selecting signal, and in response to determining that a value in the received master-or-slave mode selecting signal is zero, determining that the chip is to serve as the master chip.

13. The chip according to claim 12, further comprising a data selecting module configured for: reading data from a slave chip or writing data to a slave chip via a data signal,
wherein the system cascade bus switch module is configured for: controlling loopback data access and read or write access selection performed by the data selecting module.

14. The chip according to claim 13, wherein the system cascade bus switch module comprises:
a memory configured for: caching data and control signals during a system cascade bus switch;
a memory controlling sub-module configured for: controlling access of the memory; and
a system cascade bus switch sub-module configured for: selecting, via an address signal, a slave chip to be accessed; the address signal comprising first data and second data, the first data being consistent with the master-or-slave mode selecting signal and located at a high bit or a low bit in the address signal, the second data being a chip identification of the slave chip to be accessed by the master chip; setting, via a valid enabling signal, an access mode of a slave chip; setting, via a write enabling signal, whether a slave chip is in a valid write mode; setting, via a read enabling signal, whether a slave chip is in a read enabled mode; determining, by receiving a valid read signal, whether the chip is in a state of reading data from a slave chip; and sending a slave chip a resetting signal and resetting the slave chip via the resetting signal.

15. The chip according to claim 13, wherein the system cascade bus switch module is configured for: accessing the slave chips via channels in different address spaces, wherein the address spaces are configurable.

16. A chip, comprising an interface signal control module and a cascade system bus switch module,
wherein the interface signal control module is configured for: receiving a master-or-slave mode selecting signal which is for indicating whether the chip is to serve as a master chip or as a slave chip; in response to determining, according to the master-or-slave mode selecting signal, that the chip is to serve as a slave chip, triggering the cascade system bus switch module,
wherein the cascade system bus switch module is configured for: receiving access and control from the master chip, and processing data by cooperating with the master chip.

17. The chip according to claim 16, wherein the interface signal control module comprises:
a receiving sub-module configured for: receiving the master-or-slave mode selecting signal; and
a logic sub-module configured for: performing internal logic according to the received master-or-slave mode selecting signal, and in response to determining that a value in the received master-or-slave mode selecting signal is non-zero, determining that the chip is to serve as a slave chip.

18. The chip according to claim 17, further comprising a data selecting module configured for: exchanging a data signal with the master chip for the master chip to write data to the chip or for the master chip to read data from the chip.

19. The chip according to claim 18, wherein the cascade system bus switch module comprises:
a memory configured for: caching data and control signals;
a memory controlling sub-module configured for: memory access control;
an address mapping sub-module configured for: pre-storing an address mapping table for dividing an address space of the chip into configurable fixed channels in space units;
a cascade system bus switch sub-module configured for: receiving an address signal sent by the master chip, determining whether the chip is a slave chip to be accessed by the master chip, and in response to determining that the chip is the slave chip to be accessed by the master chip, establishing a connection with the master chip; determining an access mode of the chip by receiving a valid enabling signal sent by the master chip; determining, by receiving a write enabling signal sent by the master chip, whether the chip is in a valid write mode; determining, by receiving a read enabling signal sent by the master chip, whether the chip is in a read enabled mode; informing, by sending the master chip a valid read signal, the master chip to read data from the informing chip; and
a system control register sub-module configured for: in response to receiving a resetting signal sent by the master chip, resetting the chip.

20. The chip according to claim 18, wherein the cascade system bus switch module is configured for: receiving an address channel configured by the master chip, and receiving, via the address channel, access from the master chip.

21. A device for chip interconnection, comprising a master chip and N slave chips, the N being a positive integer no smaller than 1,
wherein the master chip is configured for: receiving a master-or-slave mode selecting signal which is for indicating whether the chip is to serve as a master chip or as a slave chip; in response to determining, according to the master-or-slave mode selecting signal, that the chip is to serve as a master chip, accessing the N slave chips, controlling the N slave chips, and processing memory data by cooperating with the N slave chips;
wherein each of the N slave chips is configured for: receiving a master-or-slave mode selecting signal; in response to determining, by the secondary chip according to the master-or-slave mode selecting signal, that the secondary chip is to serve as a slave chip, receiving access and control from the master chip, and processing data by cooperating with the master chip.

22. The device according to claim 21, wherein the master chip comprises an interface signal control module and a system cascade bus switch module,
wherein the interface signal control module is configured for: receiving the master-or-slave mode selecting signal, and in response to determining, according to the master-or-slave mode selecting signal, that the chip is to serve as a master chip, triggering the system cascade bus switch module,
wherein the system cascade bus switch module is configured for: accessing the N slave chips, and processing memory data by cooperating with the N slave chips, the N being a positive integer no smaller than 1.

23. The device according to claim 22, wherein the interface signal control module comprises:
a receiving sub-module configured for: receiving the master-or-slave mode selecting signal; and
a logic sub-module configured for: performing internal logic according to the received master-or-slave mode selecting signal, and in response to determining that a value in the received master-or-slave mode selecting signal is zero, determining that the chip is to serve as the master chip.

24. The device according to claim 23, wherein the master chip further comprises a data selecting module configured for: reading data from a slave chip or writing data to a slave chip via a data signal,
wherein the system cascade bus switch module is configured for: controlling loopback data access and read or write access selection performed by the data selecting module.

25. The device according to claim 24, wherein the system cascade bus switch module comprises:
a memory configured for: caching data and control signals during a system cascade bus switch;
a memory controlling sub-module configured for: controlling access of the memory;
a system cascade bus switch sub-module configured for: selecting, via an address signal, a slave chip to be accessed; the address signal comprising first data and second data, the first data being consistent with the master-or-slave mode selecting signal and located at a high bit or a low bit in the address signal, the second data being a chip identification of the slave chip to be accessed by the master chip; setting, via a valid enabling signal, an access mode of a slave chip; setting, via a write enabling signal, whether a slave chip is in a valid write mode; setting, via a read enabling signal, whether a slave chip is in a read enabled mode; determining, by receiving a valid read signal, whether the master chip is in a state of reading data from a slave chip; and
a system control register sub-module configured for: sending a slave chip a resetting signal and resetting the slave chip via the resetting signal.

26. The device according to claim 24, wherein the system cascade bus switch module is configured for: accessing the slave chips via channels in different address spaces, wherein the address spaces are configurable.

27. The device according to claim 21, wherein the slave chip comprises an interface signal control module and a cascade system bus switch module,
wherein the interface signal control module is configured for: receiving the master-or-slave mode selecting signal which is for indicating whether the chip is to serve as a master chip or as a slave chip; in response to determining, according to the master-or-slave mode selecting signal, that the chip is to serve as a slave chip, triggering the cascade system bus switch module,
wherein the cascade system bus switch module is configured for: receiving access and control from the master chip, and processing data by cooperating with the master chip.

28. The device according to claim 27, wherein the interface signal control module comprises:
a receiving sub-module configured for: receiving the master-or-slave mode selecting signal; and
a logic sub-module configured for: performing internal logic according to the received master-or-slave mode selecting signal, and in response to determining that a value in the received master-or-slave mode selecting signal is non-zero, determining that the chip is to serve as a slave chip.

29. The device according to claim 28, wherein the slave chip further comprises a data selecting module configured for: exchanging a data signal with the master chip for the master chip to write data to the chip or for the master chip to read data from the chip.

30. The device according to claim 29, wherein the cascade system bus switch module comprises:
a memory configured for: caching data and control signals;
a memory controlling sub-module configured for: memory access control;
an address mapping sub-module configured for: pre-storing an address mapping table for dividing an address space of the chip into configurable fixed channels in space units;
a cascade system bus switch sub-module configured for: receiving an address signal sent by the master chip, determining whether the chip is a slave chip to be accessed by the master chip, and in response to determining that the chip is the slave chip to be accessed by the master chip, establishing a connection with the master chip; determining an access mode of the chip by receiving a valid enabling signal sent by the master chip; determining, by receiving a write enabling signal sent by the master chip, whether the chip is in a valid write mode; determining, by receiving a read enabling signal sent by the master chip, whether the chip is in a read enabled mode; informing, by sending the master chip a valid read signal, the master chip to read data from the informing chip; and
a system control register sub-module configured for: in response to receiving a resetting signal sent by the master chip, resetting the chip.

31. The device according to claim 29, wherein the cascade system bus switch module is configured for: receiving an address channel configured by the master chip, and receiving, via the address channel, access from the master chip.
